# EUROPÄISCHE PATENTSCHRIFT

(11) **EP 0 486 877 B1**
(45) Veröffentlichungstag und Bekanntmachung des Hinweises auf die Patenterteilung: **27.04.1994**
(21) Anmeldenummer: 91118916.5
(22) Anmeldetag: 06.11.1991
(51) Int. Cl.: B23Q 3/155, B23Q 5/58

(54) **Werkzeugmaschine und Verfahren zum Öffnen und Schliessen eines Greifers**
Machine tool and method for opening and closing a gripper
Machine outil et méthode pour ouvrir et fermer une griffe

(30) Priorität: 20.11.1990 DE 4036915
(43) Veröffentlichungstag der Anmeldung: 27.05.1992
(73) Patentinhaber: CHIRON-WERKE GMBH & CO. KG, 78532 Tuttlingen (DE)
(72) Erfinder: Rütschle, Eugen, W-7202 Mühlheim/Donau (DE); Haninger, Rudolf, W-7201 Seitingen-Oberflacht (DE)
(74) Vertreter: Witte, Alexander, Dr.-Ing.

(56) Entgegenhaltungen:
- DD-A- 281 768
- DE-A- 3 428 152
- DE-A- 3 504 586
- DE-B- 1 477 501

## Beschreibung

Die Erfindung betrifft eine Werkzeugmaschine mit zumindest einem zum Wechseln von Werkzeugen der Werkzeugmaschine vorgesehenen Werkzeugwechsler, der einen Greifer aufweist, an dem mindestens eine bewegliche Backe zum formschlüssigen Ergreifen der Werkzeuge angeordnet ist, wobei der Greifer ein in seiner Längsrichtung axial verschiebbares Betätigungsorgan aufweist,
das die mindestens eine Backe in Abhängigkeit von seiner Axialbewegung zum Ein- und Ausführen der Werkzeuge öffnet bzw. zum formschlüssigen Ergreifen der Werkzeuge schließt, wobei das Betätigungsorgan zum Öffnen der mindestens einen Backe durch Verfahren des Greifers gegen einen raumfesten Anschlag der Werkzeugmaschine in eine aixal erste Endlage verschiebbar ist, und wobei das Betätigungsorgan ferner zum Schließen der mindestens einen Backe beim Wegfahren des Greifers von dem Anschlag durch Schließmittel in eine axial zweite Endlage überführbar ist.

Eine Werkzeugmaschine der vorstehend genannten Art ist aus der DE-OS-3 717 201 bekannt.

Die Erfindung betrifft ferner ein Verfahren zum Öffnen und Schließen eines Greifers, der an einem zum Wechseln von Werkzeugen einer Werkzeugmaschine vorgesehenen Werkzeugwechsler angeordnet ist und mindestens eine bewegliche Backe zum formschlüssigen Ergreifen der Werkzeuge sowie ein in seiner Längsrichtung axial verschiebbares Betätigungsorgan aufweist, das die mindestens eine Backe in Abhängigkeit von seiner Axialbewegung öffnet und schließt, mit den Schritten:
- Verfahren des Greifers gegen einen raumfesten Anschlag der Werkzeugmaschine, um das Betätigungsorgan zum Öffnen der mindestens einen Backe in eine axial erste Endlage zu verschieben, und
- Wegfahren des Greifers von dem Anschlag, wobei das Betätigungsorgan zum Schließen der mindestens einen Backe über Schließmittel in seine axial zweite Endlage überführt wird.

Ein derartiges Verfahren wird bei der aus der DE-OS-3 717 201 bekannten Werkzeugmaschine durchgeführt.

Bei dieser bekannten Werkzeugmaschine wird an einer Vielzahl von Werkstücken nacheinander programmgesteuert eine Vielzahl von Bearbeitungsschritten ausgeführt. Die verschiedenen Werkzeuge werden in einem Magazin bereitgehalten, so daß beim Wechseln von einem Bearbeitungsschritt zum nächsten das zuvor benutzte Werkzeug mittels eines an einem Werkzeugwechsler angeordneten Greifers ausgewechselt und ein neues Werkzeug für den nächsten Bearbeitungsschritt aus dem Magazin in die Spindel eingesetzt werden kann. Der Werkzeugwechsler weist dazu einen beweglichen Arm auf, an dessen freiem Ende der Greifer befestigt ist.

Die Greifer der bekannten Werkzeugmaschine sind je mit zwei festen Backen versehen, zwischen denen das jeweilige Werkzeug in einer Richtung senkrecht zu seiner Achse formschlüssig geführt werden kann. Weiterhin sind zwei bewegliche Backen vorgesehen, die in ihrer Schließstellung das zwischen den festen Backen aufgenommene Werkzeug formschlüssig umgreifen. Wenn die beweglichen Backen geöffnet sind, kann das jeweilige Werkzeug aus den feststehenden Backen entnommen bzw. zwischen diese eingeführt werden.

Das Verschwenken der beweglichen Backen erfolgt über ein längsverschieblich an dem Greifer gelagertes Betätigungsorgan, dessen Axialbewegung über ein zwangsgesteuertes Öffnungsgetriebe in die Spreizbewegung der Backen und über ein ebenfalls zwangsgesteuertes Schließgetriebe in die Schließbewegung der Backen umgesetzt wird. Zum Öffnen wird der Greifer so gegen einen an der Werkzeugmaschine vorgesehenen raumfesten Anschlag gefahren, das das Betätigungsorgan in seine axial erste Endlage geschoben wird. Das Betätigungsorgan ist mittels einer Druckfeder federbelastet, so daß beim Verlassen des raumfesten Anschlages das Betätigungsorgan in seine radial zweite Endlage gedrückt wird, in der es die beweglichen Backen in ihrer Schließstellung hält.

Aus dem Gesagten wird deutlich, daß die Kraft der Druckfeder zum Schließen der Backen und zum Geschlossenhalten der Backen verwendet wird. Die Haltekraft und die Schließkraft wird folglich durch die Spannkraft der Druckfeder bestimmt.

Bei dem bekannten Greifer ist es von Nachteil, daß bei einem Nachlassen der Spannkraft der Feder die Schließkraft und die Haltekraft zurückgehen, bzw. bei einem Bruch der Feder völlig verlorengehen. Die Greifer der bekannten Werkzeugmaschine sind also, was das Schließen der beweglichen Backen angeht, auf die Zuverlässigkeit der Druckfeder angewiesen.

Oftmals reicht die Federkraft auch nicht aus, um die Backen zu schließen. Dies geschieht insbesondere dann, wenn das Schließgetriebe durch in den Greifer gelangte Späne verklemmt ist. Beim Verfahren des Greifers kann in diesen Fällen das Werkzeug aus dem Greifer herausfallen und Schäden an der Werkzeugmaschine hervorrufen.

Weiterhin kann es vorkommen, daß ein Werkzeug nicht richtig aus der Spindel ausgestoßen oder schief an den Greifer übergeben wird. Bei nicht ausgestoßenem Werkzeug verläßt der Greifer u.a. seine Position, ohne das Werkzeug mitgenommen zu haben. Bei dem darauffolgenden Einwechseln des nächsten Werkzeuges kommt es damit zu einer Kollision zwischen dem neuen einzuwechselnden Werkzeug und dem noch in der Spindel sitzenden Werkzeug. Aber auch ein schief in dem Greifer sitzendes Werkzeug führt zu Schäden, denn es läßt sich bei einem späteren Bearbeitungsgang nicht wieder in die Spindel einsetzen.

Bei der bekannten Werkzeugmaschine kann es daher zu Folgeschäden wegen eines nicht geschlossenen Greifers oder wegen eines nicht ausgestoßenen oder schief sitzenden Werkzeuges kommen. Das bekannte Verfahren, bei dem das Schließen des Greifers während des Wegfahrens von dem raumfesten Anschlag lediglich durch Federkraft bewirkt wird, ist mit den selben Nachteilen behaftet.

Der Erfindung liegt daher die Aufgabe zugrunde, eine Werkzeugmaschine und ein Verfahren der eingangs genannten Art dahingehend weiterzubilden, daß die vorstehend genannten Nachteile vermieden werden. Insbesondere soll bei einfachem Aufbau ein sicheres Schließen des Greifers gewährleistet sein. Darüberhinaus sollen auch bestehende Werkzeugmaschinen so umgerüstet werden können, daß auf ihnen das erfindungsgemäße Verfahren durchgeführt werden kann.

Bezüglich der eingangs genannten Werkzeugmaschine wird diese Aufgabe dadurch gelöst, daß die Schließmittel einen Kupplungsmechanismus aufweisen, der das Betätigungsorgan beim Anfahren des Greifers an den Anschlag mit diesem verbindet, so daß beim Wegfahren des Greifers das Betätigungsorgan in seine axial zweite Endlage bewegt wird.

Bezüglich des eingangs genannten Verfahrens wird diese Aufgabe dadurch gelöst, daß die folgenden weiteren Schritte vorgesehen sind:
- Verbinden des Betätigungsorganes mit dem Anschlag, durch das Verfahren des Greifers gegen den Anschlag,
- Ziehen des mit dem Anschlag verbundenen Betätigungsorganes in seine axial zweite Endlage, durch das Wegfahren des Greifers von dem Anschlag, und
- Lösen des in seiner axial zweiten Endlage befindlichen Betätigungsorganes von dem Anschlag, durch weiteres Wegfahren des Greifers von dem Anschlag.

Die der Erfindung zugrundeliegende Aufgabe wird auf diese Weise vollkommen gelöst. Der Kupplungsmechanismus verbindet nämlich beim Anfahren des Greifers an den Anschlag das Betätigungsorgan mit dem Anschlag, so daß beim Wegfahren das Betätigungsorgan in seine axial zweite Endlage gezogen wird. Wenn das Betätigungsorgan seine zweite Endlage eingenommen hat, wird es wieder von dem Anschlag gelöst. Dies kann entweder durch eine geeignete Greiferbewegung oder durch einen fremdkraftbetätigten Mechanismus wie z.B. einen Druckluftmechanismus erfolgen. Zum Schließen des Greifers ist damit keine Federkraft mehr erforderlich, die Greiferbewegung selbst öffnet nicht nur die Backe, sondern schließt sie beim Verlassen des Anschlages auch wieder.

Bei einem Ausführungsbeispiel der neuen Werkzeugmaschine ist es bevorzugt, wenn der Kupplungsmechanismus ein selbsttätiger Kupplungsmechanismus ist, der beim Verfahren des Greifers gegen den Anschlag das Betätigungsorgan selbsttätig mit dem Anschlag verbindet und der beim Wegfahren des Greifers von dem Anschlag das in seiner axial zweiten Endlage befindliche Betätigungsorgan selbsttätig von dem Anschlag freigibt.

Diese Maßnahme ist insofern von Vorteil, daß keine externe Steuerung für den Kupplungsmechanismus erforderlich ist. Auch auf eine komplizierte Bewegung des Greifers zum Einkuppeln und Auskuppeln kann verzichtet werden. Der Kupplungsmechanismus kann beispielsweise einen Schnappmechanismus enthalten oder magnetische Anziehungskräfte ausnutzen.

Bei der neuen Werkzeugmaschine ist es weiter bevorzugt, wenn das Betätigungsorgan die mindestens eine Backe zwangsgesteuert schließt.

Diese Maßnahme hat den an sich bekannten Vorteil, daß das Betätigungsorgan unmittelbar der Schließbewegung der mindestens einen Backe folgt und umgekehrt. Im Zusammenhang mit der vorliegenden Erfindung bietet das jedoch den weiteren Vorteil, daß das Betätigungsorgan seine axial zweite Endlage nur dann einnehmen kann, wenn der Greifer auch tatsächlich geschlossen ist. Bei einem schief sitzenden Werkzeug ist dies nicht möglich. Weil der selbsttätige Kupplungsmechanismus das Betätigungsorgan jedoch erst dann von dem Anschlag freigibt, wenn es seine axial zweite Endlage erreicht hat, kann es bei der neuen Werkzeugmaschine damit nicht mehr vorkommen, daß ein Greifer mit nicht geschlossener Backe den Anschlag verläßt. Derartige Fehlfunktionen sind folglich ausgeschlossen. Dementsprechend sorgt das neue Verfahren dafür, daß nur geschlossene Greifer endgültig von dem raumfesten Anschlag weg bewegt werden. Die Folgeschäden durch einen nicht geschlossenen Greifer werden so vermieden. Wenn das Werkzeug nicht aus der Spindel ausgestoßen werden kann, bleibt der Greifer an der Spindel hängen, was zwar zu einer Bearbeitungsunterbrechung führt, die Folgeschäden eines nicht ausgestoßenen Werkzeuges bei gleichzeitig weggefahrenem Greifer jedoch vermeidet.

Hier ist es ferner bevorzugt, wenn der Kupplungsmechanismus ein mit dem Betätigungsorgan verbundenes erstes Hakenteil sowie ein mit dem Anschlag verbundenes, dem ersten Hakenteil zugeordnetes zweites Hakenteil aufweist, wobei eines der beiden Hakenteile in einer unter einem Winkel zu der Längsrichtung des Betätigungsorganes verlaufenden Richtung seitlich bewegbar ist, und wobei Steuermittel vorgesehen sind, die in Abhängigkeit von der axialen Lage des Betätigungsorganes die seitliche Bewegung des einen Hakenteiles freigeben oder blockieren.

Diese Maßnahme ist insbesondere unter konstruktiven Gesichtspunkten von Vorteil, weil der Kupplungsmechanismus sozusagen lageabhängig gesteuert wird. Durch Ausweichen des z.B. federbelasteten beweglichen Hakens beim Anfahren des Anschlages gelangen die beiden Hakenteile in Eingriff miteinander und verriegeln das Betätigungsorgan formschlüssig mit dem Anschlag. Nach dem Herausziehen des Betätigungsorganes in seine axial zweite Endlage geben die Steuermittel das vorher blockierte bewegliche Hakenteil wieder frei, so daß es sich durch eine seitliche Bewegung von dem anderen Hakenteil lösen kann.

Zum Schließen des Greifers ist es lediglich erforderlich, den Greifer von dem Anschlag wegzufahren. Nur die Kraft, mit der die Greiferbewegung durchgeführt wird, bestimmt die Schließkraft für die beweglichen Backe. Wenn die Backe verklemmt, weil beispielsweise das zwangsgesteuerte Schließgetriebe verschmutzt ist oder das Werkzeug nicht aus der Spindel ausgestoßen wurde, bleibt der Greifer an dem Anschlag hängen. Es treten - wie gesagt - keine Folgeschäden auf, der Bearbeitungsprozeß wird lediglich unterbrochen.

Ferner ist es bevorzugt, wenn der Kupplungsmechanismus Führungsflächen aufweist, die in Abhängigkeit von der relativen Bewegung des Greifers zu dem Anschlag das bewegliche Hakenteil mit dem anderen Hakenteil in Eingriff oder außer Eingriff bringen.

Diese Maßnahme ist konstruktiv von Vorteil, denn die Bewegung des Greifers selbst steuert nicht nur das Herausziehen und Freikommen des Betätigungsorganes, sondern auch das Verbinden des Betätigungsorganes mit dem Anschlag. Es sind keine weiteren Kraftquellen, wie z.B. eine Rückstellfeder für das bewegliche Hakenteil erforderlich.

Hier ist es weiterhin bevorzugt, wenn das bewegliche Hakenteil einen quer zu der Längsrichtung des Betätigungsorganes verschiebbaren Stift aufweist, an dem mit den Führungsflächen zusammenwirkende Gegenflächen vorgesehen sind.

Auch diese Maßnahme ist sowohl unter konstruktiven Aspekten als auch unter Sicherheitsaspekten von Vorteil, denn ein hin- und hergeschobener Stift neigt weniger zum Verklemmen als ein verschwenkter Haken. Das bewegliche Hakenteil könnte nämlich nach dem Freikommen von dem anderen Hakenteil in der ausgelenkten Stellung hängen bleiben, so daß bei einem erneuten Anfahren eines Greifers an den Anschlag die beiden Hakenteile nicht wieder in Eingriff gelangen können. Bei einem verschiebbaren Stift ist diese Gefahr nicht gegeben.

Ferner ist es bevorzugt, wenn dem beweglichen Hakenteil ein Zapfen zugeordnet ist, der die Bewegung des Stiftes in beiden Richtungen begrenzt.

Durch diese konstruktiv sehr einfache Maßnahme wird in vorteilhafter Weise verhindert, daß der bewegliche Stift von dem zweiten Hakenteil abfällt.

Weiterhin ist es bevorzugt, wenn der Stift an dem Anschlag gelagert ist, und wenn die Steuermittel ein an dem Greifer angeordnetes Gegenstück mit einer dem ersten Hakenteil zugekehrten Haltefläche aufweisen, die bei in Eingriff befindlichem ersten und zweiten Hakenteil mit einem Ende des Stiftes in Anlage ist.

Diese Maßnahme ist konstruktiv von Vorteil, denn sie ermöglicht das Nachrüsten von bereits bestehenden Werkzeugmaschinen. Hierzu ist lediglich an dem bereits vorhandenen raumfesten Anschlag ein beweglicher Stift anzuordnen, während an dem Greifer ein Gegenstück mit Haltefläche sowie an dem Betätigungsorgan ein erstes Hakenteil zu befestigen ist.

Bei diesem Ausführungsbeispiel ist es weiter bevorzugt, wenn an dem ersten Hakenteil eine Nase mit einer schräg auf den Greifer zu weisenden ersten Führungsfläche angeordnet ist, die bei in der axial zweiten Endlage befindlichem Betätigungsorgan einen größeren Abstand zu dem Greifer aufweist als eine Oberkante der Haltefläche, und die einer der Gegenflächen des Stiftes zugeordnet ist.

Diese Maßnahme ermöglicht auf konstruktiv einfache und vorteilhafte Weise ein Entriegeln des Kupplungsmechanismus. Die Haltefläche gibt den Stift frei, sobald das Betätigungsorgan in seine axial zweite Endlage gezogen wurde, und beim weiteren Wegfahren des Greifers von dem Anschlag verschiebt die Nase über die erste Führungsfläche den Stift zur Seite, so daß das Betätigungsorgan von dem Anschlag freikommt.

Weiterhin ist es bevorzugt, wenn an dem Gegenstück oberhalb der Oberkante der Haltefläche eine zweite Führungsfläche vorgesehen ist, die schräg nach oben von dem Greifer weg sowie auf die Nase zu weist, und die beim Verfahren des Greifers gegen den Anschlag mit einer Gegenfläche des Stiftes in Anlage kommt und diesen unter die Nase schiebt.

Auf diese konstruktiv einfache Weise wird der Stift sozusagen zwischen das erste Halteteil bzw. dessen Nase und das Gegenstück eingefädelt.

Weiterhin ist es bevorzugt, wenn oberhalb der ersten und der zweiten Führungsfläche an der Nase bzw. an dem Gegenstück je eine weitere Führungsfläche vorgesehen ist, wobei die weiteren Führungsflächen beim Verfahren des Greifers gegen den Anschlag den Stift über seine Gegenflächen derart verschieben, daß er mit der zweiten Führungsfläche des Gegenstückes in Anlage gelangt.

Diese Maßnahme hat den Vorteil, daß der Stift dem Greifer sozusagen in beliebiger Lage angeboten werden kann, er wird zunächst durch die weiteren Führungsflächen so verschoben, daß er beim weiteren Annähern des Greifers an den Anschlag mit der zweiten Führungsfläche des Gegenstückes in Anlage gelangt, welche den Stift dann unter die Nase schiebt.

Bei diesem Ausführungsbeispiel ist es ferner bevorzugt, wenn die Werkzeugmaschine Zentriermittel aufweist, die beim Verfahren gegen den und beim Wegfahren von dem Anschlag den Greifer seitlich festlegen.

Bei dieser Maßnahme ist von Vorteil, daß der Greifer während des Ineingriffgelanges der beiden Hakenteile und/oder während des Herausziehens des Betätigungsorganes in seine axial zweite Endlage durch evtl. auftretende Querkräfte nicht seitlich verschoben werden kann. Die evtl. auftretenden Querkräfte müssen nicht von dem Werkzeugwechsler aufgenommen werden, sondern werden in die Zentriermittel geleitet. Wegen dieser an sich bei bestehenden Werkzeugmaschinen bekannten Maßnahme können die bestehenden Werkzeugmaschinen auf das erfindungsgemäße Verfahren umgerüstet werden, denn sie müssen lediglich mit den das erste sowie das zweite Hakenteil und das Gegenstück aufweisenden Kupplungsmitteln versehen werden.

Weiterhin ist es bevorzugt, wenn das erfindungsgemäße Verfahren auf einer erfindungsgemäßen Werkzeugmaschine durchgeführt wird.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: eine Draufsicht auf einen Greifer einer erfindungsgemäßen Werkzeugmaschine, in Schließstellung;
- Fig. 2: eine Darstellung, ähnlich Fig. 1, jedoch in Spreizstellung;
- Fig. 3: eine Seitenansicht, in vergrößerter Darstellung und teilweise abgebrochen, des geschlossenen Greifers aus Fig. 1, in einer Ansicht in Richtung des Pfeils III in Fig. 1, in einer ersten Arbeitsstellung, in der ein Greifer noch von einem Anschlag beabstandet ist;
- Fig. 4: eine Seitenansicht, ähnlich Fig. 3, in der der Greifer jedoch so weit an den Anschlag herangefahren wurde, daß sich der Stift zwischen erstem Hakenteil und Gegenstück befindet;
- Fig. 5: eine Schnittdarstellung, in vergrößerter Darstellung, entlang der Linie V-V in Fig. 1, in der der Greifer so weit an den Anschlag herangefahren dargestellt ist, daß sich das Betätigungsorgan in Anlage mit dem Anschlag befindet; und
- Fig. 6: eine Schnittdarstellung des geöffneten Greifers aus Fig. 2, entlang der Linie VI-VI in Fig. 2.

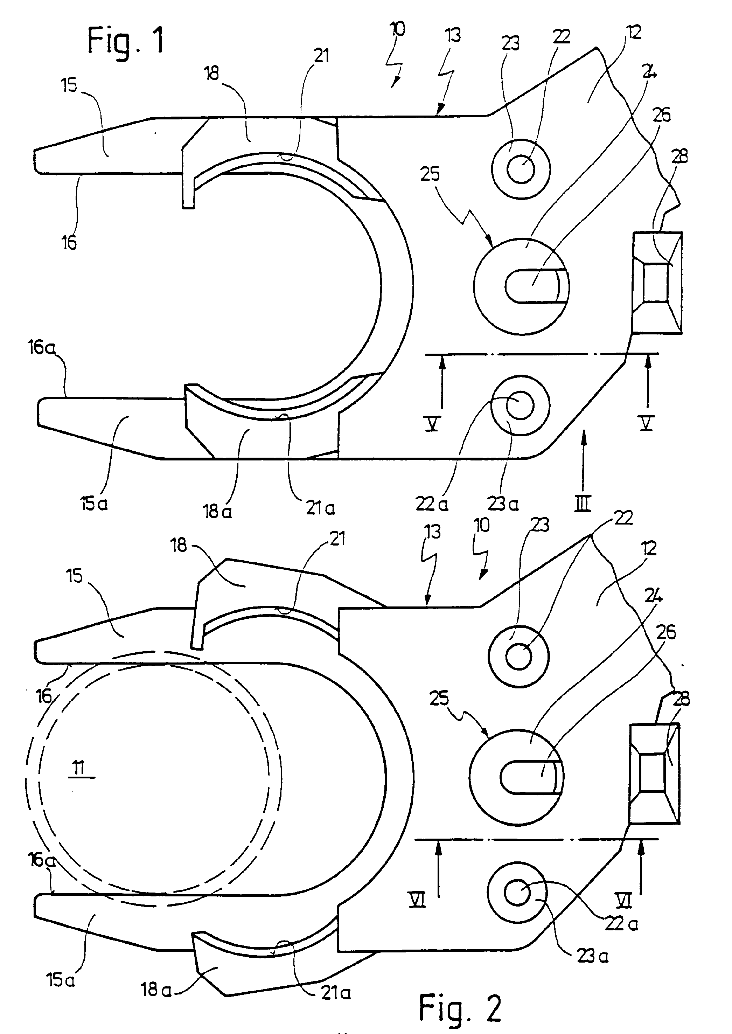

In den Fig. 1 und 2 bezeichnet 10 insgesamt einen Werkzeugwechsler, der zum Ergreifen und Halten eines in Fig. 2 schematisch angedeuteten Werkzeuges 11 vorgesehen ist. Ein Arm 12 des Werkzeugwechslers 10 ist in den Fig. 1 und 2 nur abgebrochen dargestellt; er verläuft im allgemeinen aus der Zeichenebene heraus. Ein an dem Arm 12 angeordneter Greifer 13 des Werkzeugwechslers 10 erstreckt sich dagegen in der Zeichenebene.

Mit 15, 15a sind zwei feste Backen des Greifers 13 bezeichnet. Die Backen 15 sind nach vorne offen und weisen zueinander parallele Führungen 16, 16a auf, zwischen denen das Werkzeug 11 formschlüssig axial geführt wird. Das Werkzeug 11 ist hierzu mit einem axialen Profil versehen, wie es an sich bekannt ist.

Weiterhin weist der Greifer 13 zwei bewegliche Backen 18, 18a auf, die oberhalb der festen Backen 15, 15a angeordnet sind. In Fig. 1 sind die beweglichen Backen 18 geschlossen, während sie in Fig. 2 zum Ein- und Ausführen des Werkzeuges 11 geöffnet sind. Die beweglichen Backen 18, 18a sind mit kreisbogenförmigen Halterungen 21, 21a versehen, die ebenfalls an die an sich bekannte Außenkontur des Werkzeuges 11 angepaßt sind. Die geschlossenen Backen 18, 18a halten mit den Halterungen 21, 21a ein in dem Greifer 13 aufgenommenes Werkzeug 11 formschlüssig radial fest.

An dem Greifer 13 sind ferner Teile 22, 22a angeordnet, die in noch näher zu beschreibender Weise zum Zentrieren des Greifers 13 unter einer Spindel der Werkzeugmaschine dienen. Die Teile 22, 22a stellen jedoch auch Achsen 23, 23a dar, um welche die beweglichen Backen 18, 18a zum Öffnen oder Schließen verschwenkt werden. Dieses Verschwenken der beweglichen Backen 18, 18a wird über ein in seiner Längsrichtung verschieblich an dem Greifer 13 gelagertes Betätigungsorgan 24 bewirkt, das in dem gezeigten Ausführungsbeispiel der Fig. 1 und 2 in die Zeichenebene hinein bzw. aus ihr heraus bewegbar ist. Diese Axialbewegung des Betätigungsorganes 24, das in diesem Falle ein Bolzen 25 ist, wird in an sich bekannter Weise über ein zwangsgesteuertes Schließgetriebe und über ein ebenfalls zwangsgesteuertes Öffnungsgetriebe in die Schließ- bzw. Spreizbewegung der beweglichen Backen 18, 18a umgesetzt. Derartige Getriebe, die eine Axialbewegung in eine Schwenkbewegung umsetzen, sind beispielsweise aus der eingangs genannten DE-OS-3 717 201 bekannt, deren Offenbarungsgehalt durch diese Bezugnahme auch zum Offenbarungsgehalt der vorliegenden Anmeldung gemacht wird.

An dem Bolzen 25 ist ein erstes Hakenteil 26 angeordnet, das in noch näher zu beschreibender Weise mit einem an dem Greifer befestigten Gegenstück 28 zusammenwirkt, um den geöffneten Greifer aus Fig. 2 in seine in Fig. 1 gezeigte geschlossene Stellung zu überführen.

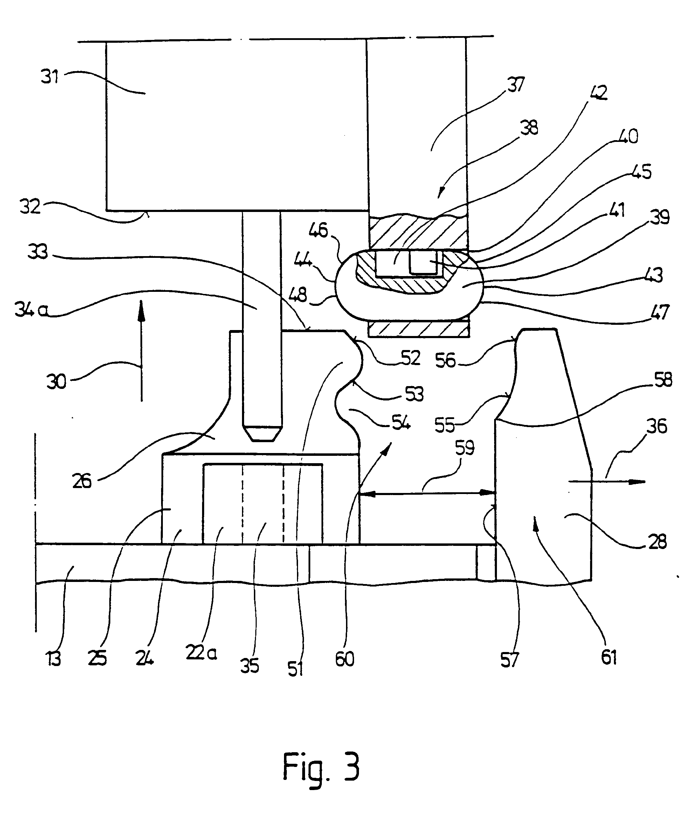

Zum Öffnen des geschlossenen Greifers 13 wird dieser in einer durch einen Pfeil 30 in Fig. 3 angedeuteten Richtung gegen einen raumfesten Anschlag 31 der Werkzeugmaschine gefahren. Der Anschlag 31 weist eine Anschlagfläche 32 auf, die mit einer Kopffläche 33 des ersten Hakenteiles 26 beim Verfahren des Greifers 13 gegen den Anschlag 31 in Anlage gelangt und so den Bolzen 25 in die Zeichenebene der Fig. 1 und 2 hinein bzw. in Fig. 3 in einer zu der Richtung des Pfeiles 30 entgegengesetzten Richtung verschiebt. In Fig. 3 ist gezeigt, daß in der Nähe des Anschlages 31 an der Werkzeugmaschine Führungsstifte 34, 34a angeordnet sind, von denen in Fig. 3 lediglich der Führungsstift 34a zu erkennen ist. Die Führungsstifte 34, 34a verlaufen in einer zu der Richtung 30 parallelen Richtung und greifen beim Verfahren des Greifers 13 gegen den Anschlag 31 in Bohrungen 35 der Teile 22, 22a ein. Auf diese Weise wird der Greifer 13 zu dem Anschlag 31 zentriert und eine seitliche Bewegung in einer bei 36 angedeuteten Querrichtung verhindert. In Querrichtung 36 auftretende Querkräfte werden von den als Zentriermittel dienenden Teilen 22a und Führungsstifen 34a aufgenommen.

Weiterhin ist Fig. 3 zu entnehmen, daß in der Nähe des Anschlages 31 an einem Vorsprung 37 ein zweites Hakenteil 38 angeordnet ist, das in dem gezeigten Ausführungsbeispiel einen in Querrichtung 36 längsverschieblich gelagerten Stift 39 umfaßt. Dem in einer Bohrung 40 des Vorsprunges 37 geführten Stift 39 ist ein an dem Vorsprung 37 angeordneter Zapfen 41 zugeordnet, der in eine Aussparung 42 des Stiftes 39 eingreift. Auf diese Weise verhindert der Zapfen 41, daß der Stift 39 seitlich in Querrichtung 36 oder in entgegengesetzter Richtung aus der Bohrung 40 herausfallen kann.

Der Stift 39 weist zwei seitlich aus der Bohrung 40 hervorragende ballige Enden 43 und 44 auf, an denen jeweils eine nach oben weisende Gegenfläche 45 bzw. 46 sowie je eine nach unten weisende Gegenfläche 47 bzw. 48 vorgesehen sind. Die Gegenflächen 45, 46, 47, 48 wirken in noch näher zu beschreibender Weise mit Führungsflächen zusammen, die an Teilen des Greifers 13 vorgesehen sind.

So weist das erste Hakenteil 26 eine auf das Gegenstück 28 gerichtete Nase 51 auf, an der eine schräg nach oben von dem Greifer 13 weg weisende obere Führungsfläche 52 sowie eine schräg nach unten auf den Greifer 13 zu weisende untere Führungsfläche 53 angeordnet sind. An die konvexe Nase 51 mit den Führungsflächen 52 und 53 schließt sich nach unten eine konkave Ausnehmung 54 an, deren Gestalt in etwa dem balligen Ende 54 des Stiftes 39 entspricht.

An dem Gegenstück 28 sind ebenfalls zwei Führungsflächen 55 und 56 angeordnet, von denen sich die obere Führungsfläche 56 etwa auf der gleichen Höhe befindet, wie die Führungsfläche 52 der Nase 51, wenn sich der Bolzen 25 in seiner in Fig. 3 gezeigten axialen Endlage befindet, in welcher die Backen 18, 18a des Greifers 13 geschlossen sind.

Die Führungsfläche 55 liegt in dieser Stellung des Bolzens 25 unterhalb der Nase 51 und weist schräg nach oben auf die Nase 51 zu und von dem Greifer 13 weg. Unterhalb der Führungsfläche 55 ist an dem Gegenstück 28 eine parallel zu der Richtung 30 verlaufende Haltefläche 57 angeordnet, die in noch näher zu beschreibender Weise mit dem balligen Ende 53 des Stiftes 39 zusammenwirkt. Die Haltefläche 57 geht unter Ausbildung einer Oberkante 58 in die Führungsfläche 55 über, wobei die Oberkante 58 in Richtung 30 gemessen einen geringeren Abstand zu dem Greifer 13 aufweist, als die Führungsfläche 53, wenn sich der Bolzen 25 in der in Fig. 3 gezeigten Stellung befindet.

Der in Querrichtung 36 gemessene Abstand zwischen dem Bolzen 25 und der Haltefläche 57 ist bei 59 angedeutet und ist geringfügig kleiner als die Ausdehnung des Stiftes 39 in Querrichtung 36 gemessen.

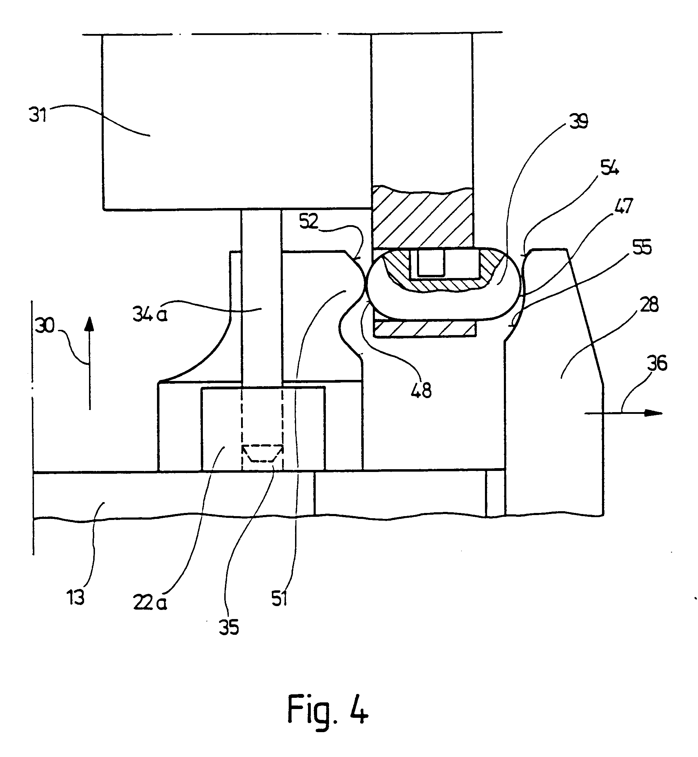

Das erste Hakenteil 26, das zweite Hakenteil 38 sowie das Gegenstück 28 sind in soweit beschreiben, daß ihre Funktion als Kupplungsmittel 60 zum wahlweisen Verbinden des Betätigungsorganes 24 mit dem Anschlag 31 anhand der nachfolgenden Fig. 4 bis 6 erläutert werden soll. Es ist zu erwähnen, daß das Gegenstück 28 mit seiner Haltefläche 57 und der unteren Führungsfläche 55 ein Steuermittel 61 für die seitliche Bewegung des Hakenteils 38 bzw. des Stiftes 39 darstellen.

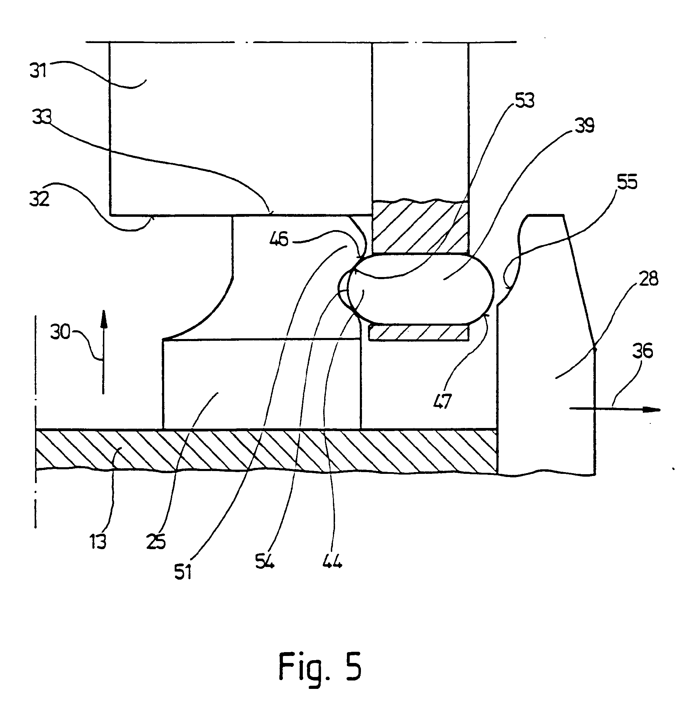

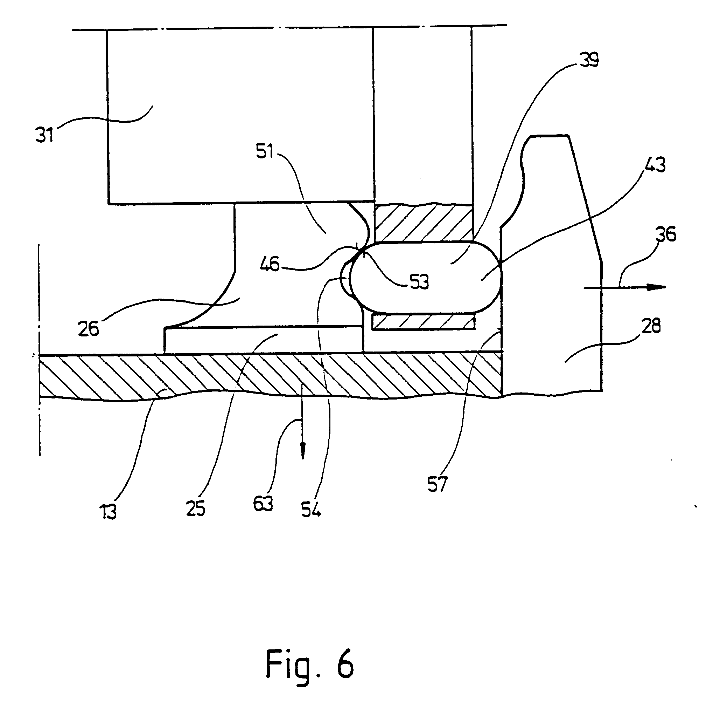

Der Greifer 13 wird zum Öffnen der Backen 18, 18a in Richtung 30 weiter auf den Anschlag 31 zu bewegt und gelangt dabei in die in Fig. 4 gezeigte Position. Über die Führungsflächen 52 und 54, die mit den Gegenflächen 58 bzw. 47 zusammenwirken, ist der Stift 39 in Fig. 4 gegenüber Fig. 3 nach rechts verschoben worden, so daß er bei der weiteren Annäherung des Greifers 13 an den Anschlag 31 zwischen die Nase 51 und das Gegenstück 58 gelangt ist. Beim weiteren Verfahren des Greifers 13 in Richtung 30 auf den Anschlag 31 zu gelangt die Führungsfläche 55 mit der Gegenfläche 47 in Anlage und verschiebt den Stift 39 in einer zu der Querrichtung 36 entgegengesetzten Richtung, so daß er, wie in Fig. 5 gezeigt, mit seinem balligen Ende 44 in der Ausnehmung 54 zu liegen kommt. In dieser Stellung des Greifers 13 relativ zu dem Anschlag 31 befindet sich die Anschlagfläche 32 in Anlage mit der Kopffläche 33, so daß beim weiteren Verfahren des Greifers 13 in Richtung 30 der Bolzen 25 in den Greifer 13 hineingeschoben wird. Diese Axialbewegung des Bolzens 25 wird über ein an sich bekanntes Öffnungsgetriebe in die Schwenkbewegung der beweglichen Backen 18, 18a umgesetzt, die sich folglich öffnen. Bei diesem weiteren Anfahren gelangt der Stift 39 - wie in Fig. 6 gezeigt - mit seinem balligen Ende 43 in Anlage mit der Haltefläche 57 des Gegenstückes 28. In dieser Position des Greifers 13, bezogen auf den Anschlag 31, ist der zwischen Nase 51 und Gegenstück 28 eingefädelte Stift 39 durch die Ausnehmung 54 und die Haltefläche 58 in Querrichtung 36 festgelegt. Ein Verschieben des Stiftes 39 ist nicht möglich.

Durch das Zusammenwirken der Nase 51 und des Gegenstückes 28 mit dem Stift 39 ist der Bolzen 25 jetzt formschlüssig mit dem Anschlag 31 verbunden. Wird jetzt der Greifer 13 in einer zu der Richtung 30 entgegengesetzten Löserichtung 63 von dem Anschlag 31 weggefahren, so zieht der Greifer 13 dabei den Bolzen 25 in seine axial zweite Endlage, und schließt so die beweglichen Backen 18, 18a. Ein seitliches Wegbewegen des Greifers 13 von dem Anschlag 31 wird durch die in den Fig. 3 und 4 gezeigten Zentriermittel verhindert. Beim Bewegen des Greifers 13 in Richtung 63 gelangt der Stift 39 über seine Gegenfläche 46 mit der Führungsfläche 53 der Nase 51 in Anlage und verbindet die Nase 51 so mit dem Anschlag 31. Beim Wegfahren des Greifers 13 gleitet dabei der Stift 39 mit seinem balligen Ende 43 an der Haltefläche 57 vorbei, die ein Ausweichen des Stiftes 39 in Querrichtung 36 verhindert.

Der Greifer 13 nimmt jetzt wieder seine in Fig. 5 gezeigte Position ein, in welcher der Bolzen 25 wieder seine axial zweite Endlage eingenommen und dabei über das Schließgetriebe die beweglichen Backen 18, 18a geschlossen hat.

Sollte das Schließgetriebe klemmen oder das Werkzeug 11 so in dem Greifer 13 aufgenommen sein, daß die beweglichen Backen 18, 18a sich nicht schließen können - diese Situation ist in Fig. 2 gezeigt - kann folglich der Bolzen 25 wegen der Zwangssteuerung nicht vollständig in seine axial zweite Endlage überführt werden. In diesem Falle bleibt der Stift 39 zwischen der Ausnehmung 54 und der Haltefläche 57 eingeklemmt, so daß der Greifer 13 nicht von dem Anschlag 31 freikommen kann, sondern sozusagen hängen bleibt. Der Bearbeitungsprozeß wird dadurch zwar unterbrochen, aber die Folgeschäden eines nicht geschlossenen Greifers oder eines schief in dem Greifer aufgenommenen Werkzeuges 11, werden vermieden.

Wenn sich die Backen 18, 18a jedoch vorschriftsmäßig schließen, fädelt sich der Stift 39 durch Zusammenwirken der Gegenfläche 46 mit der Führungsfläche 53 seitlich außer Eingriff mit der Nase 51. Der Stift 39 gelangt über seine in Fig. 5 gezeigte Lage zu der in Fig. 4 gezeigten Lage, in welcher sich der Kupplungsmechanismus 60 selbsttätig wieder geöffnet hat. Allein durch das Wegfahren des Greifers 13 von dem Anschlag 31 und das damit verbundene Herausziehen des Bolzens 25 ist also der Kupplungsmechanismus 60 geöffnet worden. Im umgekehrten Falle wurde die Verbindung zwischen dem Betätigungsorgan 24 und dem Anschlag 54 durch das Einfädeln des Stiftes 39 zwischen Nase 51 und Gegenstück 28 auch lediglich durch die Bewegung des Greifers - in diesem Falle auf den Anschlag 31 zu - bewirkt.

## Patentansprüche

1. Werkzeugmaschine mit zumindest einem zum Wechseln von Werkzeugen (11) der Werkzeugmaschine vorgesehenen Werkzeugwechsler (10), der einen Greifer (13) aufweist, an dem mindestens eine bewegliche Backe (18, 18a) zum formschlüssigen Ergreifen der Werkzeuge (11) angeordnet ist, wobei der Greifer (13) ein in seiner Längsrichtung (30) axial verschiebbares Betätigungsorgan (24) aufweist, das die mindestens eine Backe (18, 18a) in Abhängigkeit von seiner Axialbewegung zum Ein- und Ausführen der Werkzeuge (11) öffnet, bzw. zum formschlüssigen Ergreifen der Werkzeuge (11) schließt, wobei das Betätigungsorgan (24) zum Öffnen der mindestens einen Backe (18, 18a) durch Verfahren des Greifers (13) gegen einen raumfesten Anschlag (31) der Werkzeugmaschine in eine axial erste Endlage verschiebbar ist, und wobei das Betätigungsorgan (24) ferner zum Schließen der mindestens einen Backe (18, 18a) beim Wegfahren des Greifers (13) von dem Anschlag (31) durch Schließmittel in eine axial zweite Endlage überführbar ist, dadurch gekennzeichnet, daß die Schließmittel einen Kupplungsmechanismus (60) aufweisen, der das Betätigungsorgan (24) beim Anfahren des Greifers (13) an den Anschlag (31) mit diesem verbindet, so daß beim Wegfahren des Greifers (13) das Betätigungsorgan (24) in seine axial zweite Endlage bewegt wird.

2. Werkzeugmaschine nach Anspruch 1, dadurch gekennzeichnet, daß der Kupplungsmechanismus (60) ein selbsttätiger Kupplungsmechanismus (60) ist, der beim Verfahren des Greifers (13) gegen den Anschlag (31) das Betätigungsorgan (24) selbsttätig mit dem Anschlag (31) verbindet und der beim Wegfahren des Greifers (13) von dem Anschlag (31) das in seiner axial zweiten Endlage befindliche Betätigungsorgan (24) selbsttätig von dem Anschlag (31) freigibt.

3. Werkzeugmaschine nach Anspruch 1 oder 2, dadurch gekennzeichnet, daß das Betätigungsorgan (24) die mindestens eine Backe (18, 18a) zwangsweise schließt.

4. Werkzeugmaschine nach Anspruch 3, dadurch gekennzeichnet, daß der Kupplungsmechanismus (60) ein mit dem Betätigungsorgan (24) verbundenes, erstes Hakenteil (26) sowie ein mit dem Anschlag (31) verbundenes, dem ersten Hakenteil (26) zugeordnetes zweites Hakenteil (38) aufweist, wobei eines der beiden Hakenteile (38) in einer unter einem Winkel zu der Längsrichtung (30) des Betätigungsorganes (24) verlaufenden Richtung (36) seitlich bewegbar ist, und wobei Steuermittel (61) vorgesehen sind, die in Abhängigkeit von der axialen Lage des Betätigungsorganes (24) die seitliche Bewegung des einen Hakenteiles (38) freigeben oder blockieren.

5. Werkzeugmaschine nach Anspruch 4, dadurch gekennzeichnet, daß der Kupplungsmechanismus (60) Führungsflächen (52, 53, 54, 55) aufweist, die in Abhängigkeit von der relativen Bewegung des Greifers (13) zu dem Anschlag (31) das bewegliche Hakenteil (38) mit dem anderen Hakenteil (26) in Eingriff oder außer Eingriff bringen.

6. Werkzeugmaschine nach Anspruch 5, dadurch gekennzeichnet, daß das bewegliche Hakenteil (38) einen quer zu der Längsrichtung (30) des Betätigungsorganes (24) verschiebbaren Stift (39) aufweist, an dem mit den Führungsflächen (52, 53, 54, 55) zusammenwirkende Gegenflächen (58, 56, 57) vorgesehen sind.

7. Werkzeugmaschine nach Anspruch 6, dadurch gekennzeichnet, daß dem beweglichen Hakenteil (38) ein Zapfen (41) zugeordnet ist, der die Bewegung des Stiftes (39) in beiden Richtungen (36) begrenzt.

8. Werkzeugmaschine nach den Ansprüchen 6 oder 7, dadurch gekennzeichnet, daß der Stift (39) an dem Anschlag (31) gelagert ist, und daß die Steuermittel (61) ein an dem Greifer (13) angeordnetes Gegenstück (28) mit einer dem ersten Hakenteil (26) zugekehrten Haltefläche (57) aufweisen, die bei in Eingriff befindlichem ersten und zweiten Hakenteil (26, 38) mit einem Ende (43) des Stiftes (39) in Anlage ist.

9. Werkzeugmaschine nach Anspruch 8, dadurch gekennzeichnet, daß an dem ersten Hakenteil (26) eine Nase (51) mit einer schräg auf den Greifer (13) zu weisenden ersten Führungsfläche (53) angeordnet ist, die bei in der axial zweiten Endlage befindlichem Betätigungsorgan (24) einen größeren Abstand zu dem Greifer (13) aufweist als eine Oberkante (58) der Haltefläche (57), und die einer der Gegenflächen (46) des Stiftes (39) zugeordnet ist.

10. Werkzeugmaschine nach Anspruch 9, dadurch gekennzeichnet, daß an dem Gegenstück (28) oberhalb der Oberkante (58) der Haltefläche (57) eine zweite Führungsfläche (55) vorgesehen ist, die schräg nach oben von dem Greifer (13) weg sowie auf die Nase (51) zu weist, und die beim Verfahren des Greifers (13) gegen den Anschlag (31) mit einer Gegenfläche (47) des Stiftes (39) in Anlage kommt und diesen unter die Nase (51) schiebt.

11. Werkzeugmaschine nach Anspruch 10, dadurch gekennzeichnet, daß oberhalb der ersten und der zweiten Führungsfläche (53, 55) an der Nase (51) bzw. dem Gegenstück (58) je eine weitere Führungsfläche (52, 56) vorgesehen ist, wobei die weiteren Führungsflächen (52, 56) beim Verfahren des Greifers (13) gegen den Anschlag (53) den Stift (39) über seine Gegenflächen (58, 57) derart verschieben, daß er mit der zweiten Führungsfläche (55) des Gegenstückes (28) in Anlage gelangt.

12. Werkzeugmaschine nach einem der vorhergehenden Ansprüche, dadurch gekennzeichnet, daß sie Zentriermittel (22, 34) aufweist, die beim Verfahren gegen den und beim Wegfahren von dem Anschlag (31) den Greifer (13) seitlich festlegen.

13. Verfahren zum Öffnen und Schließen eines Greifers (13), der an einem zum Wechseln von Werkzeugen (11) einer Werkzeugmaschine vorgesehenen Werkzeugwechsler (10) angeordnet ist und mindestens eine bewegliche Backe (18, 18a) zum formschlüssigen Ergreifen der Werkzeuge (11) sowie ein in seiner Längsrichtung (30) axial verschiebbares Betätigungsorgan (24) aufweist, das die mindestens eine Backe (18, 18a) in Abhängigkeit von seiner Axialbewegung öffnet oder schließt, mit den Schritten:
- Verfahren des Greifers (13) gegen einen raumfesten Anschlag (31) der Werkzeugmaschine, um das Betätigungsorgan (24) zum Öffnen der mindestens einen Backe (18, 18a) in eine axial erste Endlage zu schieben, und
- Wegfahren des Greifers (13) von dem Anschlag (31), wobei das Betätigungsorgan (24) zum Schließen der mindestens einen Backe (18, 18a) über Schließmittel in seine axial zweite Endlage überführt wird,
gekennzeichnet durch die weiteren Schritte:
- Verbinden des Betätigungsorganes (24) mit dem Anschlag (31), durch das Verfahren des Greifers (13) gegen den Anschlag (31).
- Ziehen des mit dem Anschlag (31) verbundenen Betätigungsorganes (24) in seine axial zweite Endlage, durch das Wegfahren des Greifers (13) von dem Anschlag (31), und
- Lösen des in seiner axial zweiten Endlage befindlichen Betätigungsorganes (24) von dem Anschlag (31), durch weiteres Wegfahren des Greifers (13) von dem Anschlag (31).

14. Verfahren nach Anspruch 13, dadurch gekennzeichnet, daß es auf einer Werkzeugmaschine nach einem der Ansprüche 1 bis 12 durchgeführt wird.

## Claims

1. Machine tool having at least one tool changer (10) for exchanging the tools (11) of the machine tool, the tool changer (10) comprising a gripper (13) provided with at least one movable jaw (18, 18a) for form-locking engagement of the tools (11) and being equipped with an actuating member (24), which is arranged for axial displacement in the longitudinal direction (30) thereof and which, depending on its axial movement, acts to open the at least one jaw (18, 18a) for the purpose of inserting or removing the tools (11), or to close it for form-locking engagement of the tools (11), and which can be displaced into a first axial end position, by moving the gripper (13) against a stationary stop (31) of the machine tool, for opening the at least one jaw (18, 18a), and can be further transferred, by closing means, into a second axial end position for closing the at least one jaw (18, 18a), as the gripper (13) is moved away from the stop (31), characterized in that said closing means comprise a coupling mechanism (60) which, when driving the gripper (13) against the stop (31), connects the actuating member (24) therewith, so that the acutating member (24) is moved into its second axial end position during driving away of the gripper (13).

2. Machine tool according to claim 1, characterized in that the coupling mechanism (60) is an automatic coupling mechanism (60) which automatically connects said actuating member (24) and said stop (31) as said gripper (13) is moved against said stop (31), and which automatically releases said actuating member (24), which occupies its second axial end position, from said stop (31) as said gripper (13) moves away from said stop (31).

3. Machine tool according to claim 1 o 2, characterized in that said actuating member (24) closes the at least one jaw (18, 18a) in a positively controlled manner.

4. Machine tool according to claim 3, characterized in that said coupling mechanism (60) comprises a first hook element (26), which is connected to said actuating member (24), and a second hook element (38), which is associated with said first hook element (26) and is connected to said stop (31), one of said two hook elements (38) being movable laterally in a direction (36) extending at an angle to the longitudinal direction (30) of said actuating member (24), and control means (61) being provided for releasing or blocking the lateral movement of said one hook element (38) in response to the axial position of said actuating member (24).

5. Machine tool according to claim 4, characterized in that said coupling mechanism (60) is provided with guide faces (52, 53, 54, 55) which bring said movable hook element (38) into or out of engagement with said other hook element (26) in response to the relative movement of said gripper (13) relative to said stop (31).

6. Machine tool according to claim 5, characterized in that said movable hook element (38) comprises a pin (39) which can be displaced transversely to the longitudinal direction (30) of said actuating member (24) and which is provided with counter-faces (58, 56, 57) coacting with said guide faces (52, 53, 54, 55).

7. Machine tool according to claim 6, characterized in that said movable hook element (38) coacts with a pivot (41) which acts to limit the movement of said pin (39) in both directions (36).

8. Machine tool according to claims 6 or 7, characterized in that said pin (39) is supported on said stop (31), and said control means (61) comprises a counter-element (28) arranged on said gripper (13) and having a holding surface (57) facing said first hook element (26), which abuts against one end (43) of said pin (39) when said first and said second hook elements (26, 38) are in engagement one with the other.

9. Machine tool according to claim 8, characterized in that a lug (51) with a first inclined guide surface (53) facing said gripper (13) is provided on said first hook element (26), which guide surface (53) is spaced a greater distance from said gripper (13) than an upper edge (58) of said holding surface (57), when said actuating member (24) occupies its second axial end position, and coacts with one of said counter-surfaces (46) of said pin (39).

10. Machine tool according to claim 9, characterized in that said counter-element (28) is provided, above said upper edge (58) of said holding surface (57), with a second oblique guide surface (55) which points in upward direction, away from said gripper (13) and toward said lug (51), and which comes to engage a counter-surface (47) of said pin (39) and to push the latter beneath said lug (51) as said gripper (13) is moved against said stop (31).

11. Machine tool according to claim 10, characterized in that another guide surface (52, 56) each is provided on said lug (51) and said counter-element (58), respectively, above said first and said second guide surfaces (53, 55), which further guide surfaces (52, 56) come to act upon said counter-surfaces (58, 57) of said pin (39) when said gripper (13) is moved against said stop (31), in such a way that said pin (39) comes to rest against said second guide surface (55) of said counter-element (28).

12. Machine tool according to any of the preceding claims, characterized in that said machine tool comprises centering means (22, 34) for restraining said gripper (13) laterally as it is moved toward or away from said stop (31).

13. Method for opening and closing a gripper (13) which is provided on a tool changer (10) intended for exchanging tools (11) of a machine tool and which is provided with at least one movable jaw (18, 18a) for form-locking engagement of the tools (11), and further with an actuating member (24) which is axially displaceable in the longitudinal direction thereof and which opens and closes the at least one jaw (18, 18a) in repsonse to its axial movement, comprising the steps of:
- moving said gripper (13) against a stationary stop (31) of the machine tool, in order to transfer said actuating member (24) into a first axial end position for opening the at least one jaw (18, 18a), and
- moving said gripper (13) away from said stop (31), whereby said actuating member (24) is transferred, via closing means, to its second axial end position, for closing the at least one jaw (18, 18a),
characterized by the further steps of:
- connecting the actuating member (24) with the stop (31) by moving the gripper (13) against the stop (31);
- pulling the actuating member (24), with the stop (31) connected to it, into its second axial end position, by moving the gripper (13) away from the stop (31); and
- disconnecting the actuating member (24), which occupies its second axial end position, from the stop (31) by moving the gripper (13) further away from the stop (31).

14. Method according to claim 13, characterized in that it is carried out on a machine tool according to any of claims 1 to 12.

## Revendications

1. Machine-outil pourvue d'au moins un changeur d'outil (10) prévu pour le changement d'outils (11) de la machine-outil, présentant un preneur (13) sur lequel est disposée au moins une mâchoire mobile (18, 18a) pour saisir, par complémentarité de formes, les outils (11), le preneur (13) présentant un organe d'actionnement (24) susceptible d'être déplacé axialement dans sa direction longitudinale (30), qui ouvre la mâchoire (18, 18a), au nombre minimum d'une, en fonction de son déplacement axial pour introduire et dégager les outils (11) et/ou la ferme pour saisir, par complémentarité de formes, les outils (11), l'organe d'actionnement (24), pour ouvrir la mâchoire (18, 18a), au nombre minimum d'une, étant susceptible d'être déplacé dans une première position finale axialement, en amenant le preneur (13) contre une butée (31) fixe de la machine-outil, et l'organe d'actionnement (24), en outre, pour fermer la mâchoire (18, 18a), au nombre minimum d'une, grâce à des moyens de fermeture, étant susceptible de passer dans une deuxième position finale axialement, lorsque le preneur (13) s'éloigne de la butée (31), caractérisé en ce que les moyens de fermeture présentent un mécanisme d'embrayage (60), qui relie l'organe d'actionnement (24), lorsque le preneur (13) arrive contre la butée (31), à celle-ci, de telle sorte que, lorsque le preneur (13) s'éloigne, l'organe d'actionnement (24) soit déplacé dans sa deuxième position finale axialement.

2. Machine-outil selon la revendication 1, caractérisée en ce que le mécanisme d'embrayage (60) est un mécanisme d'embrayage (60) automatique qui, lorsque le preneur (13) est amené contre la butée (31), relie automatiquement l'organe d'actionnement (24) à la butée (31) et qui, lorsque le preneur (13) s'éloigne de la butée (31), libère automatiquement de la butée (31) l'organe d'actionnement (24) se trouvant dans sa deuxième position finale axialement.

3. Machine-outil selon la revendication 1 ou 2, caractérisée en ce que l'organe d'actionnement (24) ferme obligatoirement la mâchoire (18, 18a), au nombre minimum d'une.

4. Machine-outil selon la revendication 3, caractérisée en ce que le mécanisme d'embrayage (60) présente une première partie formant crochet (26), reliée à l'organe d'actionnement (24) ainsi qu'une deuxième partie formant crochet (38), reliée à la butée (31) et associée à la première partie formant crochet (26), l'une des deux parties formant crochet (38) étant susceptible de se déplacer latéralement dans une direction (36) décrivant un angle par rapport à la direction longitudinale (30) de l'organe d'actionnement (24), et des moyens de commande (61) étant prévus, qui libèrent ou bloquent le déplacement latéral de l'une des parties formant crochet (38), en fonction de la position axiale de l'organe d'actionnement (24).

5. Machine-outil selon la revendication 4, caractérisée en ce que le mécanisme d'embrayage (60) présente des surfaces de guidage (52, 53, 54, 55) qui amènent la partie formant crochet (38) mobile en prise avec l'autre partie formant crochet (26) ou qui l'en dégagent, en fonction du déplacement relatif du preneur (23) vis-à-vis de la butée (31).

6. Machine-outil selon la revendication 5, caractérisée en ce que la partie formant crochet (38) mobile possède une goupille (39) susceptible de se déplacer perpendiculairement à la direction longitudinale (30) de l'organe d'actionnement (24), sur laquelle sont prévues des surfaces complémentaires (58, 56, 57) coopérant avec les surfaces de guidage (52, 53, 54, 55).

7. Machine-outil selon la revendication 6, caractérisée en ce qu'une clavette (41) est associée à la partie formant crochet (38) mobile, qui limite le déplacement de la goupille (39) dans les deux directions (36).

8. Machine-outil selon les revendications 6 ou 7, caractérisée en ce que la goupille (39) est montée sur la butée (31) et en ce que les moyens de commande (61) présentent une contre-partie (28) située sur le preneur (13), possédant une surface de maintien (57) orientée en direction de la première partie formant crochet (26) qui, lorsque les première et deuxième parties formant crochet (26, 38) sont en prise, repose contre une extrémité (43) de la goupille (39).

9. Machine-outil selon la revendication 8, caractérisée en ce qu'un bec (51) est prévu sur la première partie formant crochet (26) présentant une première surface de guidage (53) oblique orientée en direction du preneur (13) qui, lorsque l'organe d'actionnement (24) se trouve dnas la deuxième position finale axialement, présente un plus grand écart vis-à-vis du preneur (13) qu'une arête supérieure (58) de la surface de maintien (57) et qui est associée à l'une des surfaces complémentaires (46) de la goupille (39).

10. Machine-outil selon la revendication 9, caractérisée en ce qu'au-dessus de l'arête supérieure (58) de la surface de maintien (57), une deuxième surface de guidage (55) est prévue sur la contre-partie (28), orientée obliquement vers le haut, à l'opposé du preneur (13) ainsi qu'en direction du bec (51) et qui, lorsque le preneur (13) est amené contre la butée (31), vient en contact avec une surface complémentaire (47) de la goupille (39) et pousse celle-ci sous le bec (51).

11. Machine-outil selon la revendication 10, caractérisée en ce que respectivement une surface de guidage supplémentaire (52, 56) est prévue au-dessus de la première et de la deuxième surface de guidage (53, 55), sur le bec (51) et sur la contre-partie (28), les surfaces de guidage supplémentaires (52, 56), lorsque le preneur (13) est amené contre la butée (31), déplaçant la goupille (39) sur les surfaces qui lui sont complémentaires (58, 57) de telle sorte qu'elle vienne en contact avec la deuxième surface de guidage (55) de la contre-partie (28).

12. Machine-outil selon l'une des revendications précédentes, caractérisée en ce qu'elle possède des moyens de centrage (22, 34) qui bloquent latéralement le preneur (13) lorsque celui-ci est amené contre la butée (31) ou lorsqu'il s'en éloigne.

13. Procédé d'ouverture et de fermeture d'un preneur (13), monté sur un changeur d'outil (10) prévu pour le changement d'outils (11) d'une machine-outil et possédant au moins une mâchoire (18, 18a) mobile pour saisir, par complémentarité de formes, les outils (11) ainsi qu'un organe d'actionnement (24) susceptible d'être déplacé axialement dans sa direction longitudinale (30), qui ouvre et ferme la mâchoire (18, 18a), au nombre minimum d'une, en fonction de son déplacement axial, comprenant les étapes suivantes :
- déplacement du preneur (13) contre une butée (31) fixe de la machine-outil, afin d'amener l'organe d'actionnement (24) dans une première position finale axialement afin d'ouvrir la mâchoire (18, 18a), au nombre minimum d'une, et
- éloignement du preneur (13) de la butée (31), l'organe d'actionnement (24) étant amené dans sa deuxième position finale axialement, afin de fermer la mâchoire (18, 18a), au nombre minimum d'une, grâce à des moyens de fermeture,
caractérisé par les étapes suivantes :
- liaison de l'organe d'actionnement (24) avec la butée (31), grâce au déplacement du preneur (13) contre la butée (31)
- retrait de l'organe d'actionnement (24), relié à la butée (31), dans sa deuxième position finale axialement, grâce à l'éloignement du preneur (13) de la butée (31), et
- séparation de l'organe d'actionnement (24), se trouvant dans sa deuxième position finale axialement, de la butée (31), en continuant à éloigner le preneur (13) de la butée (31).

14. Procédé selon la revendication 13, caractérisé en ce qu'il est mis en oeuvre sur une machine-outil selon l'une des revendications 1 à 12.
